# EUROPÄISCHE PATENTANMELDUNG

(11) **EP 0 623 684 A2**
(43) Veröffentlichungstag der Anmeldung: **09.11.1994**
(21) Anmeldenummer: 94890075.8
(22) Anmeldetag: 26.04.1994
(51) Int. Cl.: C21B 13/14

(54) **Verfahren zur Verwertung von eisenhältigen Abfall- oder Reststoffen**

(30) Priorität: 07.05.1993 AT 904/93
(71) Anmelder: DEUTSCHE VOEST-ALPINE INDUSTRIEANLAGENBAU GMBH, D-40219 Düsseldorf (DE)
(72) Erfinder: Kepplinger, Leopold Werner, Dipl.-Ing. Dr., A-4060 Leonding (AT); Schrey, Günter, Dipl.-Ing. Dr., A-4040 Linz (AT); Tessmer, Gero, Ing., A-4040 Linz (AT)
(74) Vertreter: Kopecky, Helmut

(57) **Zusammenfassung**

Zur Verwertung von Eisen in oxidischer Form und/oder Eisen in metallischer Form enthaltenden und/oder kohlenstoffhältigen Abfall- oder Reststoffen (38, 25, 34) kommt ein Verfahren zum Einsatz, mit dem flüssiges Roheisen (16) oder Stahlvorprodukte herstellbar sind, wobei Eisenerz (4) in einer Direktreduktionszone (2) zu Eisenschwamm reduziert, der Eisenschwamm in eine Einschmelzvergasungszone (15) unter Zufuhr von kohlenstoffhältigem Material (29) unter Vergasung des kohlenstoffhältigen Materials (29) zu Reduktionsgas eingeschmolzen wird und das Reduktionsgas in die Direktreduktionszone (2) eingeleitet, dort umgesetzt und als Topgas abgezogen wird.

Um die Abfall- oder Reststoffe vollständig und energiesparend verwerten zu können, werden die Abfall- oder Reststoffe (38,25,34) nach ihrer chemischen Zusammensetzung in drei Gruppen getrennt gesammelt, u.zw. beinhaltet eine erste Gruppe hauptsächlich Eisen in oxidischer Form enthaltende Stoffe (38), eine zweite Gruppe hauptsächlich Eisen in metallischer Form enthaltende Stoffe (25) und eine dritte Gruppe hauptsächlich kohlenstoffhältige Stoffe (34), und werden die erste Gruppe in die Direktreduktionszone (2) und die zweite Gruppe sowie die dritte Gruppe direkt in die Einschmelzvergasungszone (15) eingesetzt.

## Beschreibung

Die Erfindung betrifft ein Verfahren zur Verwertung von Eisen in oxidischer Form und/oder Eisen in metallischer Form enthaltenden und/oder kohlenstoffhältigen Abfall- oder Reststoffen, insbesondere von aus der stahlerzeugenden Industrie stammenden Abfall- oder Reststoffen, unter Einsatz eines Verfahrens zur Herstellung von flüssigem Roheisen oder Stahlvorprodukten, wobei Eisenerz in einer Direktreduktionszone zu Eisenschwamm reduziert, der Eisenschwamm in eine Einschmelzvergasungszone unter Zufuhr von kohlenstoffhältigem Material unter Vergasung des kohlenstoffhältigen Materials zu Reduktionsgas eingeschmolzen wird und das Reduktionsgas in die Direktreduktionszone eingeleitet, dort umgesetzt und als Topgas abgezogen wird.

Ein Verfahren dieser Art ist aus der AT-B - 376.241 bekannt. Hierbei werden Feststoffpartikel aus dem Reduktionsgas sowie aus dem aus der Direktreduktionszone austretenden Topgas in Zyklonen abgeschieden und die abgeschiedenen Feststoffe mit Bindemittel, wie Eisenoxidstaub, versetzt, brikettiert und ausschließlich der Einschmelzvergasungszone zugeführt, wobei der Eisenoxidstaub aus einer Gichtgasreinigungsanlage stammt, so daß die in der Gichtgasreinigungsanlage anfallenden Feststoffe ebenfalls verwertet werden können.

Nachteilig ist jedoch hierbei, daß infolge des Einbringens von Eisenoxiden im Einschmelzvergaser Reduktionsarbeit geleistet werden muß, um das Eisenoxid zu reduzieren, wodurch für den Einschmelzvorgang benötigte Energie diesem entzogen wird.

Aus der DE-A - 41 23 626 ist es bekannt, Hüttenreststoffe ohne Unterscheidung in oxidisch und metallisch zu agglomerieren, u.zw. unter Zuhilfenahme von Bindemitteln, Schlackenbildnern und Reduktionsmitteln, und die Agglomerate in den oberen Möllerbereich eines Schmelzaggregates einzubringen, wobei die Vorwärmung und Trocknung der Agglomerate in diesem Möllerbereich des Schmelzaggregates erfolgt. Der Möller durchsetzt das Schmelzaggregat nach dem Gegenstromprinzip, wobei er zunächst in einen im Inneren des Schmelzaggregates vorgesehenen Reduktionsbereich gelangt und anschließend im unteren Bereich des Schmelzaggregates geschmolzen wird.

Dieses bekannte Verfahren ist insofern energieaufwendig, als auch metallische Abfall- oder Reststoffe den Reduktionsbereich des Schmelzaggregates durchwandern müssen.

Es ist intern bekannt, Stäube, Schlämme und Walzzunder aus der Eisen- und Stahlindustrie zu pelletieren, in einem eigenen Reduktionsofen zu reduzieren und das erhaltene Produkt dem Hochofen aufzugeben. Dieses Verfahren erfordert einerseits einen hohen Aufwand zur Aufbereitung der Abfallstoffe und ermöglicht andererseits nicht die Wiederverwertung sämtlicher Abfallstoffe aus der Eisen- und Stahlerzeugung.

Die Erfindung stellt sich die Aufgabe, ein Verfahren zu schaffen, mit dem es möglich ist, alle eisenhältigen Abfall- oder Reststoffe, insbesondere solche aus der Hüttenindustrie, vollständig zu verwerten, so daß ein Anfall von Deponieschlämmen vermieden wird. Das Verfahren soll insbesondere energiesparend verwirklichbar sein, d.h. es sollen die Abfall- oder Reststoffe in Abhängigkeit ihrer Zusammensetzung die jeweils optimale Behandlung zur Wiederverwertung erfahren.

Diese Aufgabe wird erfindungsgemäß dadurch gelöst, daß die Abfall- oder Reststoffe nach ihrer chemischen Zusammensetzung in drei Gruppen getrennt gesammelt werden, u.zw. beinhaltet eine erste Gruppe hauptsächlich Eisen in oxidischer Form enthaltende Stoffe, eine zweite Gruppe hauptsächlich Eisen in metallischer Form enthaltende Stoffe und eine dritte Gruppe hauptsächlich kohlenstoffhältige Stoffe, und daß die erste Gruppe in die Direktreduktionszone und die zweite Gruppe sowie die dritte Gruppe direkt in die Einschmelzvergasungszone eingesetzt werden.

Erfindungsgemäß erhält die erste Gruppe mit hauptsächlich oxidischen Stoffen und die zweite Gruppe mit hauptsächlich metallischen Stoffen vor der Chargierung unterschiedliche Vorbehandlungen:

Vorzugsweise liegen die hauptsächlich oxidischen Stoffe als Abriebe von Erz und/oder von Erzpellets in Staubform vor und werden vor dem Einbringen in die Direktreduktionszone einer Brikettierung unterworfen, wobei vorteilhaft die aus oxidischen Stoffen gebildeten Briketts gemeinsam mit Erzpellets und/oder Stückerz sowie anfallendem Grobzunder gemeinsam mit den Zuschlägen in die Direktreduktionszone eingebracht werden.

Zweckmäßig werden bei einer Wäsche des Reduktionsgases und/oder des Topgases gewonnene, überwiegend metallische Partikel enthaltende Schlämme entwässert, granuliert und anschließend getrocknet, worauf das Granulat in die Einschmelzvergasungszone eingesetzt wird.

Hierbei können vorteilhaft dem Granulat Späne, Fein- und gegebenenfalls Grobeisen beigemischt werden.

Die Granulierung erfolgt zweckmäßig unter Beimengung eines Bindemittels, wobei als Bindemittel zweckmäßig gebrannter Kalk beigemischt wird.

Eine Trocknung des Granulates wird vorteilhaft in einer Kohletrocknungsanlage durchgeführt.

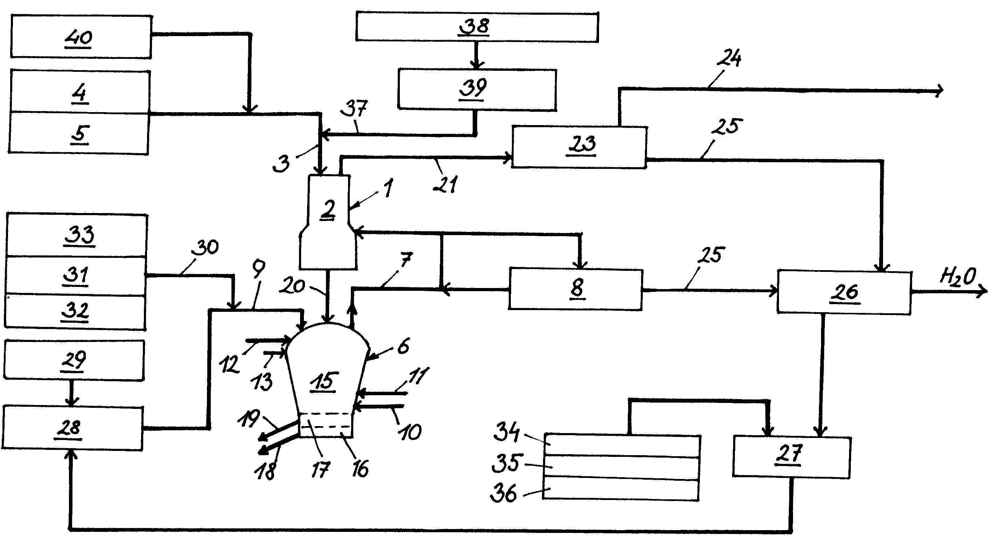

Die Erfindung ist nachfolgend anhand eines in der Zeichnung dargestellten Ausführungsbeispieles näher erläutert, wobei die Zeichnung in schematischer Darstellung eine Anlage zur Durchführung des erfindungsgemäßen Verfahrens veranschaulicht.

Gemäß der Zeichnung werden in eine als Schachtofen 1 ausgebildete Direktreduktionseinrichtung, d.h. in deren Direktreduktionszone 2, von oben über eine Zuleitung 3 stückige eisenoxidhältige Einsatzstoffe 4, wie Erz, gegebenenfalls zusammen mit ungebrannten Zuschlägen 5, chargiert. Der Schachtofen 1 steht mit einem Einschmelzvergaser 6 in Verbindung, in dem aus Kohlenstoffträgern und sauerstoffhältigem Gas ein Reduktiosngas erzeugt wird, welches über eine Zuleitung 7 dem Schachtofen 1 zugeführt wird, wobei in der Zuleitung 7 eine Gasreinigungs- und eine Gaskühlungseinrichtung 8, die als Wäscher ausgebildet ist, vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammelt sich unterhalb der Einschmelzvergasungszone 15 schmelzflüssiges Roheisen 16 und schmelzflüssige Schlacke 17, die über je einen eigenen Abstich 18, 19 getrennt abgestochen werden.

Die im Schachtofen 1 in der Direktreduktionszone 2 zu Eisenschwamm reduzierten stückigen Einsatzstoffe werden dem Einschmelzvergaser 6 über eine oder mehrere Leitungen 20 zugeführt, beispielsweise mittels Austragschnecken. An dem oberen Teil des Schachtofens 1 schließt eine Ableitung 21 für das in der Direktreduktionszone 2 entstehende Topgas an. Dieses Topgas wird einer Gasreinigungseinrichtung 23, die ebenfalls als Wäscher ausgebildet ist, zugeleitet und steht danach über die Exportgasleitung 24 einer weiteren Verwendung zur Verfügung.

Erfindungsgemäß werden beim Vergasungs- und Einschmelzprozeß sowie beim Reduktionsprozeß anfallende Abfallstoffe sowie Hüttenabfallstoffe bzw. Hüttenreststoffe wieder in den eisenerzeugenden Prozeß zurückgeführt:

In erster Linie handelt es sich hierbei um die in den Wäschern 8 und 23 des Reduktionsgases und des Topgases anfallenden Stoffe, nämlich überwiegend metallische Partikel enthaltende Schlämme 25. Das in den Wäschern 8 und 23 anfallende Schlammwasser wird einem Eindicker 26 zugeführt, dort eingedickt, und der eingedickte Schlamm wird in einer Granulationsanlage 27 zu Granulat verarbeitet. Die Agglomerierung zu Granulat erfolgt unter Verwendung geeigneter Bindemittel, wobei sich insbesondere gebrannter Kalk bewährt. Dieses Granulat wird einer Kohletrocknungsanlage 28 zugeführt und gemeinsam mit den dem Einschmelzvergaser 6 zugeführten Kohlenstoffträgern 29 getrocknet, worauf das Granulat gemeinsam mit den getrockneten Kohlenstoffträgern 29 über die Zuführung 9 in den Einschelzvergaser 6 eingebracht wird.

In die Zuführung 9 mündet eine weitere Zuführung 30, über die Späne, Feineisen 31 und eventuell auch Grobeisen 32 sowie weitere Zuschläge 33 in den Einschmelzvergaser 6 eingebracht werden können.

In die Granulationsanlage 2 wird vorteilhaft zusätzlich Kohlefilterstaub 34 und Schlamm 35 aus einer zentralen Betriebskläranlage eines Hüttenbetriebes sowie gegebenenfalls Eisenstaub 36 eingebracht, zu Granulat verarbeitet und in den Einschmelzvergaser 6 eingebracht.

In die Zuleitung 3 für das Erz mündet eine weitere Zuleitung 37, über die oxidische Stäube 38, die in einer Brikettiereinrichtung 39 zu Briketts verarbeitet wurden, in den Direktreduktionsschachtofen 1 eingebracht werden können. Als oxidische Stäube sind insbesondere Feinzunder und Hallenstaub sowie Filterstäube und der Abrieb von Erz und Pellets zu verstehen. Grobzunder 40 wird ebenfalls über die Zuleitung 3 chargiert.

Die Erfindung ermöglicht, wie aus obiger Figurenbeschreibung ersichtlich ist, die Verwertung sämtlicher in einem Hüttenbetrieb anfallender eisenhältiger Abfallstoffe, wobei das Eisen oxidisch oder metallisch vorliegen kann, in einem umweltfreundlichen und wirtschaftlichen Recycling-Verfahren, wobei der Stoff- und Energiegehalt der Abfallstoffe bzw. Nebenprodukte optimal genutzt wird. Dies gilt auch für die in einem Hüttenbetrieb anfallenden Kohlenstäube, die erfindungsgemäß ebenfalls optimal genutzt werden können.

## Patentansprüche

1. Verfahren zur Verwertung von Eisen in oxidischer Form und/oder Eisen in metallischer Form enthaltenden und/oder kohlenstoffhältigen Abfall- oder Reststoffen (38, 25, 34), insbesondere von aus der stahlerzeugenden Industrie stammenden Abfall- oder Reststoffen, unter Einsatz eines Verfahrens zur Herstellung von flüssigem Roheisen (16) oder Stahlvorprodukten, wobei Eisenerz (4) in einer Direktreduktionszone (2) zu Eisenschwamm reduziert, der Eisenschwamm in eine Einschmelzvergasungszone (15) unter Zufuhr von kohlenstoffhältigem Material (29) unter Vergasung des kohlenstoffhältigen Materials (29) zu Reduktionsgas eingeschmolzen wird und das Reduktionsgas in die Direktreduktionszone (2) eingeleitet, dort umgesetzt und als Topgas abgezogen wird, dadurch gekennzeichnet, daß die Abfall- oder Reststoffe (38,25,34) nach ihrer chemischen Zusammensetzung in drei Gruppen getrennt gesammelt werden, u.zw. beinhaltet eine erste Gruppe hauptsächlich Eisen in oxidischer Form enthaltende Stoffe (38), eine zweite Gruppe hauptsächlich Eisen in metallischer Form enthaltende Stoffe (25) und eine dritte Gruppe hauptsächlich kohlenstoffhältige Stoffe (34), und daß die erste Gruppe in die Direktreduktionszone (2) und die zweite Gruppe sowie die dritte Gruppe direkt in die Einschmelzvergasungszone (15) eingesetzt werden.

2. Verfahren nach Anspruch 1, dadurch gekennzeichnet, daß die hauptsächlich oxidischen Stoffe (38) als Abriebe von Erz und/oder von Erzpellets in Staubform vorliegen und vor dem Einbringen in die Direktreduktionszone einer Brikettierung unterworfen werden.

3. Verfahren nach Anspruch 2, dadurch gekennzeichnet, daß die aus oxidischen Stoffen (38) gebildeten Briketts gemeinsam mit Erzpellets (4) und/oder Stückerz sowie anfallendem Grobzunder (40) gemeinsam mit den Zuschlägen in die Direktreduktionszone (2) eingebracht werden.

4. Verfahren nach einem oder mehreren der Ansprüche 1 bis 3, dadurch gekennzeichnet, daß bei einer Wäsche des Reduktionsgases und/oder des Topgases gewonnene, überwiegend metallische Partikel enthaltende Schlämme (25) entwässert, granuliert und anschließend getrocknet werden, worauf das Granulat in die Einschmelzvergasungszone (16) eingesetzt wird.

5. Verfahren nach Anspruch 4, dadurch gekennzeichnet, daß dem Granulat Späne (31), Fein- und gegebenenfalls Grobeisen (32) beigemischt werden.

6. Verfahren nach Anspruch 4 oder 5, dadurch gekennzeichnet, daß die Granulierung unter Beimengung eines Bindemittels erfolgt.

7. Verfahren nach Anspruch 6, dadurch gekennzeichnet, daß als Bindemittel gebrannter Kalk beigemischt wird.

8. Verfahren nach einem oder mehreren der Ansprüche 4 bis 7, dadurch gekennzeichnet, daß die Trocknung des Granulats in einer Kohletrocknungsanlage (28) durchgeführt wird.
